# EUROPÄISCHE PATENTANMELDUNG

(11) **EP 0 759 570 A1**
(43) Veröffentlichungstag der Anmeldung: **26.02.1997**
(21) Anmeldenummer: 96112494.8
(22) Anmeldetag: 02.08.1996
(51) Int. Cl.: G02B 23/24

(54) **Endoskop für Behälter**

(30) Priorität: 22.08.1995 DE 29513422 U
(71) Anmelder: HOECHST AKTIENGESELLSCHAFT, 65929 Frankfurt am Main (DE)
(72) Erfinder: Günther, Joachim, Dl., 65936 Frankfurt (DE); Itter, Klaus, 65929 Frankfurt (DE); Simon, Klaus-Jürgen, 65779 Kelkheim (DE)

(57) **Zusammenfassung**

Die Erfindung betrifft eine Beobachtungseinrichtung enthaltend ein Endoskop, dadurch gekennzeichnet, daß das Endoskop (1) in einem Führungsteil (4) drehbar und verschiebbar gelagert ist.
Die Vorteile der Beobachtungseinrichtung sind im wesentlichen darin zu sehen, daß chemische oder physikalische Reaktionen in geschlossenen Behältern online im gesamten Behälter visuell überwacht werden können. Die Beobachtungseinrichtung kann besonders vorteilhaft bei Chromatograpiesäulen eingesetzt werden, da sie eine bessere Kontrolle des Packungsaufbaus ermöglicht.

## Beschreibung

Die Erfindung betrifft eine Beobachtungseinrichtung enthaltend ein Endoskop.

Beobachtungseinrichtungen der genannten Art sind bekannt und werden beispielsweise in der chemischen Industrie zur visuellen Inspektion von Behältern oder Rohrleitungen eingesetzt.
Diese Beobachtungseinrichtungen haben jedoch den Nachteil, daß es mit ihnen nicht möglich ist, das Innere von geschlossenen Behältern während des Betriebes, d.h. während des Ablaufs einer chemischen oder physikalischen Reaktion, visuell zu untersuchen, um beispielsweise einen Sedimentationsvorgang im gesamten Behälter oder den Aufbau einer Packung in einer Chromatographiesäule zu überwachen.

Hier will die Erfindung Abhilfe schaffen.

Erfindungsgemäß geschieht dies durch eine Beobachtungsvorrichtung der eingangs genannten Art, die dadurch gekennzeichnet ist, daß das Endoskop in einem Führungsteil drehbar und verschiebbar gelagert ist.

Gegenstand der Erfindung ist somit eine Beobachtungseinrichtung enthaltend ein Endoskop, dadurch gekennzeichnet, daß das Endoskop in einem Führungsteil drehbar und verschiebbar gelagert ist.

Besondere Ausgestaltungen der erfindungsgemäßen Beobachtungseinrichtung ergeben sich aus den Ansprüchen 2 bis 4.
Es können auch einzelne oder mehrere der in den Ansprüchen beschriebenen Einzelmerkmale jeweils für sich eigenständige erfindungsgemäße Lösungen bilden und es sind auch die Merkmale der Ausführungsformen beliebig kombinierbar.

Die Vorteile der Beobachtungseinrichtung sind im wesentlichen darin zu sehen, daß chemische oder physikalische Reaktionen in geschlossenen Behältern online im gesamten Behälter visuell überwacht werden können. Die Beobachtungseinrichtung kann besonders vorteilhaft bei Chromatographiesäulen eingesetzt werden, da sie eine bessere Kontrolle des Packungsaufbaus ermöglicht.

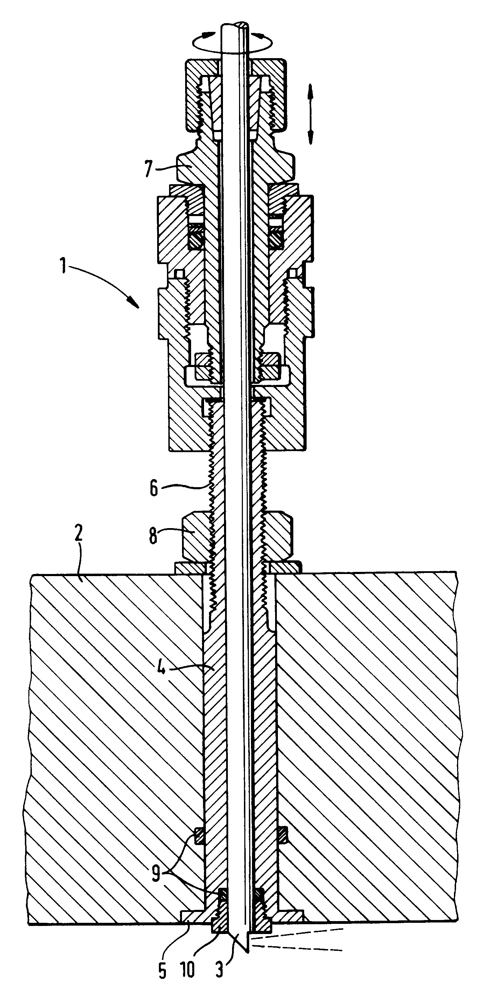

Im folgenden wird eine mögliche Ausgestaltung des Erfindungsgegenstandes anhand der Schnittzeichnung in der Figur näher beschrieben.

In der Figur ist eine Beobachtungseinrichtung 1 abgebildet, die in eine Behälterwand 2 eingebaut ist. Die Beobachtungseinrichtung 1 besteht im wesentlichen aus einem Endoskop 3, einem zylindrischen Führungsteil 4 mit Innenbohrung, das ein erstes Ende und ein zweites Ende aufweist, und einer Dreh- und Verschiebvorrichtung 7. Das Führungsteil 4, das vorzugsweise als Buchse ausgeführt ist, hat an seinem ersten Ende einen Flansch 5 und ist an seinem zweiten Ende mit einem Gewinde 6 versehen. Mittels einer Mutter 8 ist es form- und kraftschlüssig in die Behälterwand 3 integriert. In der Innenbohrung ist das Endoskop 3 dreh- und verschiebbar gelagert. O-Ringe 9 und eine Klemmverschraubung 10 gewährleisten die Dichtheit der Konstruktion. Die Dreh- und Verschiebevorrichtung 7 ist am zweiten Ende des Führungsteils 4 angeordnet. Sie ermöglicht es, das Endoskop 3 in dem Führungsteil 4 um 360° zu drehen und entlang der Achse des Führungsteils 4 hin und her zu verschieben.

## Patentansprüche

1. Beobachtungseinrichtung enthaltend ein Endoskop, dadurch gekennzeichnet, daß das Endoskop (3) in einem Führungsteil (4) drehbar und verschiebbar gelagert ist.

2. Beobachtungseinrichtung nach Anspruch 1, dadurch gekennzeichnet, daß das Führungsteil (4) ein zylindrisches Teil ist, vorzugsweise eine Buchse, mit einem ersten und zweiten Ende und mit einer Innenbohrung zur Führung des Endoskops (3), daß es an seinem ersten Ende einen Flansch (5) aufweist und an seinem zweiten Ende mit einem Gewinde (6) versehen ist.

3. Beobachtungseinrichtung nach Anspruch 1, dadurch gekennzeichnet, daß das Endoskop (3) in dem Führungsteil (4) flüssigkeitsdicht gelagert ist.

4. Beobachtungseinrichtung nach Anspruch 2, dadurch gekennzeichnet, daß am zweiten Ende des Führungsteils (4) eine Dreh- oder Verschiebevorrichtung (7) für das Endoskop (3) angeordnet ist.
